# EUROPEAN PATENT APPLICATION

(11) **EP 4 406 714 A1**
(43) Date of publication of application: **31.07.2024**
(21) Application number: 23153932.1
(22) Date of filing: 30.01.2023
(51) Int. Cl.: B28B 7/34, B28B 7/44, B28B 11/24, C04B 40/02, B28B 1/54

(54) **MOULD FOR CURING A PRECURSOR BY CARBONATION AND METHOD OF PRODUCING A CARBONATE BONDED ARTICLE USING SUCH MOULD**

(71) Applicant: VITO NV, 2400 Mol (BE)
(72) Inventor: QUAGHEBEUR, Mieke, 2400 Mol (BE); NIELSEN, Peter, 2400 Mol (BE); KAZEMI KAMYAB, Hadi, 2400 Mol (BE); DE COLLE, Mattia, 2400 Mol (BE)
(74) Representative: AWA Benelux

(57) **Abstract**

The present invention relates to a mould (1, 100, 101, 102) for curing a precursor by carbonation comprising a reaction compartment (2) configured to receive and cure the precursor, the reaction compartment (2) comprising a liquid impermeable wall (3), wherein the liquid impermeable wall (3) is permeable to CO₂ such that CO₂ is allowed to be supplied to the precursor through the wall (3) while preventing liquid water to escape through the wall (3). The invention further relates to a method of producing a carbonate bonded article by carbonation comprising supplying a precursor to a mould (1, 100, 101, 102) according to the invention.

## Description

### Technical field

The present invention is related to a mould for curing a precursor by carbonation. The invention is further related to a method of producing a carbonate bonded article by carbonation.

### Background art

Anthropogenic emission of CO₂ is accepted as being responsible for changes in global climate and potentially irreversible damaging impacts on ecosystems and societies. Various technologies designed to reduce the amount of greenhouse gases, such as CO₂, in the atmosphere demonstrate that this is an active research area. The sequestration of CO₂ offers the potential to prevent CO₂ from entering the atmosphere (e.g. by removal of the CO₂ from an industrial flue gas), or a potential route to extraction of CO₂ that is already present in the atmosphere. Physical trapping of CO₂, such as injection of CO₂ into depleted natural gas reservoirs under the seabed or into the deep ocean has not yet been proven to be a leak-proof technology option. Chemical sequestration on the other hand offers the potential to trap the CO₂ virtually permanently.

Chemical sequestration can be realised by carbonation. Carbonation is the process wherein carbonatable materials are reacted with CO₂, thereby forming carbonate precipitates. The process is also known as curing by carbonation. Known carbonatable materials include alkaline earth metals (e.g. calcium and magnesium), transition metals and post-transition metals, present as their oxides, hydroxides or as a silicate phase. The obtained carbonated article is bonded mainly by carbonates.

Typical examples of carbonated articles, or carbonate bonded articles) are construction products and building products, such as concrete masonry blocks, concrete paving blocks, concrete slabs, bricks, concrete pipes, fibre cement board and cement-bonded particleboards.

A first method of curing by carbonation is the so-called "dry" method, wherein the carbonatable materials are provided as a granulate, which is shaped by compacting under pressure (typically in a mould) prior to curing. The granulate can comprise a limited amount of water (typically up to 20 % by weight based on the dry weight of the granulate), which is typically present as moisture or hydrates. It is known that such a limited amount of water allows for easier shaping of the granulate. The shaped granulate is typically removed from the mould and then cured by carbonation, possibly in a humid environment. The presence of water in the granulate and/or the surrounding atmosphere allows the dissolution of the alkali metals, transition metals and/or post-transition metals from the silicates and/or hydroxides in the granulate. The dissolved alkali metals, transition metals and/or post-transition metals react with the carbonate ions formed by the dissolution of CO₂ in water, resulting in the formation of carbonates in solution. The carbonates hold together, i.e. glue together, the other components of the granulate material, resulting in a carbonate-based article.

Another method comprises mixing the carbonatable material(s), e.g. carbonatable material(s) as described above, with an aqueous source, such as water, to form a flowable mixture. The mixture, also called precursor, mixed precursor or suspension, is then provided to a mould for shaping the mixture. The mould defines the shape or geometry of the obtained, carbonated article. The mixture can be supplied to the mould by pouring, optionally combined with vibrating the mixture or precursor to remove any bubbles of trapped air. The shaped mixture is then exposed to, or contacted with, CO₂, typically in a heated environment, so that the carbonatable material(s) react with the CO₂, resulting in the formation of a carbonate bonded article.

GB 392,340 discloses a method for the production of synthetic building materials from lime. A slurry of hydrated lime is aerated by contacting the slurry with twice its volume of bubbles. The foamed slurry of hydrated lime is then supplied to a porous mould of perforated or woven metal. The moulds are then passed into a heated chamber or tunnel through which CO₂ circulates. The hydrated lime is carbonated, and any water formed is evacuated as water vapour due to the elevated temperature in the chamber or tunnel. A carbonated material of low density is obtained.

WO 2012/079173 discloses concrete articles obtained by carbonation in a mould. The mould has a core assembly having a plurality of perforations across at least one core from the core assembly. During carbonation, CO₂ is injected through the perforations at an elevated pressure, such as at a pressure of 350 kPa above atmospheric pressure, for a period of time of about 60 seconds or less.

Disadvantages of the foregoing moulds is that the mixture (or precursor or suspension), when supplied to the mould, tends to fill up the perforations of the mould or the mould core. Upon carbonation, the precursor material in the perforations also carbonates, and thereby complicate the removal of the carbonate based (or carbonated) article from the mould (so-called demoulding). Yet another disadvantage is that mixtures of lower viscosity (or higher liquid/solid ratio) tend to leak, e.g. drip out, from the mould through the perforations. Further, the mixture and therefor the carbonated article tend to conform to the perforated texture of the mould or mould cores, which is often not desired. A further disadvantage of the foregoing methods is that typically elevated pressures are required to inject the CO₂ into the precursor.

### Summary of the invention

The present invention aims to overcome one or more of the above drawbacks. It is an aim of the invention to provide a mould for curing a precursor by carbonation, wherein the precursor can have a liquid-to-solid ratio varying between low values and high values, including aqueous suspensions. It is a further aim to provide a mould allowing to cure the precursor, while present in the mould, in a homogeneous and uniform way. It is yet a further aim to provide a mould which allows curing at a higher rate than existing moulds. It is another aim to provide a mould wherein CO₂ can be provided to the precursor without the need for high pressures. It is an even further aim to provide a mould allowing for easy demoulding of the at least partially carbonated article.

It is also an aim of the invention to provide a method of producing a carbonate bonded article by carbonation from a wide range of precursors (low to high liquid-to-solid ratios), wherein the curing is fast and homogeneous.

With the term "hydraulic binder" is meant in the present disclosure any material that hardens after contact with, for example by the addition of, water.

The term "binder" as used in the present disclosure can refer to one or a combination of one or more carbonatable material(s) and one or more hydraulic binders (as defined above). The binder may also contain one or more inert materials, although the portion of inert material will usually be kept low. A binder is advantageously a granular or particulate material, advantageously having a particle size smaller than 100 µm.

According to a first aspect of the invention, there is provided a mould for curing a precursor by carbonation as set out in the appended claims.

The mould comprises a reaction compartment, e.g. a reaction volume. The reaction compartment is configured to receive and cure the precursor.

The reaction compartment comprises a liquid impermeable wall. The liquid impermeable wall is permeable to CO₂ such that CO₂ is allowed to be supplied to the precursor through the wall while preventing liquid water to escape through the wall. In other words, and advantageously, at least a portion of an area of the wall exposed to the reaction compartment is permeable to CO₂. Advantageously, at least a portion of an area of the wall exposed to the reaction compartment has a CO₂ permeance of at least 0.001 GPU at 70 °C and 20 bar, preferably at least 0.01 GPU at 70 °C and 20 bar, more preferably at least 0.1 GPU at 70 °C and 20 bar, such as at least 1 GPU at 70 °C and 20 bar, or at least 10 GPU at 70 °C and 20 bar.

Advantageously, at least a portion of an area of the wall exposed to the reaction compartment has a CO₂ permeance between 0.001 GPU and 1000 GPU at 70 °C and 20 bar, preferably between 0.01 GPU and 500 GPU at 70 °C and 20 bar, more preferably between 0.01 GPU and 250 GPU at 70 °C and 20 bar, or between 1 GPU and 100 GPU at 70 °C and 20 bar.

Advantageously, the liquid impermeable wall is permeable to water vapour. Consequently, and advantageously, the liquid impermeable wall can be considered to be substantially gas permeable.

Advantageously, at least 1 %, preferably at least 2 %, more preferably at least 5 %, such as at least 10 % of the total wall area of the reaction compartment is made of a material which is permeable to CO₂.

Advantageously, between 1 % and 95 %, preferably between 2 % and 90 %, such as between 5 % and 80 %, or between 10 % and 75 % of the total wall area of the reaction compartment is made of a material permeable to CO₂.

Advantageously, the material which is permeable to CO₂ has a CO₂ permeance of at least 0.001 GPU at 70 °C and 20 bar, preferably at least 0.01 GPU at 70 °C and 20 bar, more preferably at least 0.1 GPU at 70 °C and 20 bar, such as at least 1 GPU at 70 °C and 20 bar, or at least 5 GPU at 70 °C and 20 bar.

Advantageously, the material which is permeable to CO₂ has a CO₂ permeance between 0.001 GPU and 1000 GPU at 70 °C and 20 bar, preferably between 0.01 GPU and 500 GPU at 70 °C and 20 bar, more preferably between 0.01 GPU and 250 GPU at 70 °C and 20 bar, or between 0.01 GPU and 100 GPU at 70 °C and 20 bar.

Advantageously, the portion of an area of the wall exposed to the reaction compartment which is permeable to CO₂, such as the material which is permeable to CO₂, comprises or substantially consists of one or more of a silicone rubber (also known as polydimethylsiloxane, or PDMS), dimethyl silicone rubber, ethylene propylene diene rubber, polyvinyl alcohol, polyethylene oxide (PEO), a polymer of intrinsic microporosity (PIM), a thermally rearranged polymer, and ethyl cellulose.

Advantageously, the liquid impermeable wall comprises a reinforcement layer. Advantageously, the reinforcement layer comprises at least one through-opening, e.g. a hole or a perforation.

Advantageously, the liquid impermeable wall further comprises a second layer made of a liquid impermeable and CO₂ permeable second material. In other words, the second layer is made of a liquid impermeable second material having a CO₂ permeance as defined hereinabove, i.e. at least 0.001 GPU at 70 °C and 20 bar.

The second layer advantageously covers the at least one through-opening. In other words, the at least one through-opening is advantageously closed off by the second layer.

With being "closed off" is meant in the present disclosure that the second layer is provided so that the entire surface area of the through-opening(s) in the reinforcement layer is blocked or sealed by the second layer, thereby ensuring that the wall is liquid impermeable. Consequently, liquid, and also the precursor, cannot pass through the wall, while at the same time, gases, in particular CO₂ and water vapour, can pass through the liquid impermeable wall via the at least one through-opening and the gas permeable second layer covering the through-opening(s).

Advantageously, the reinforcement layer comprises an open area between 1 % and 95 %, preferably between 2 % and 90 %, such as between 5 % and 80 %, or between 10 % and 75 %. With "open area" is meant in the present disclosure the ratio of the area of the through-opening(s) to the total area of the reinforcement layer.

Advantageously, the reinforcement layer and the second layer are stacked. For example, the second layer can be provided at one or both sides of the reinforcement layer. The liquid impermeable wall can comprise two or more reinforcement layers and/or two or more second layers, which are advantageously stacked, for example by alternating reinforcement layers and second layers.

Alternatively and also advantageously, the reinforcement layer is embedded in the second layer.

Advantageously, the reinforcement layer comprises or substantially consists of a polymer, steel, wood, and/or a wood-based material.

Advantageously, the polymer is selected from the group consisting of polyurethane, polyethylene, polypropylene, polystyrene, and polycarbonate. Examples of polyethylene are high density polyethylene and ultra-high density polyethylene.

Advantageously, the wood-based material is selected from the group consisting of plywood, medium density fibreboard, high density fibreboard, and cardboard, optionally corrugated. Advantageously, the reinforcement layer comprises or substantially consists of wood.

Advantageously, the second material comprises or substantially consists of one or more of a silicone rubber (also known as polydimethylsiloxane, or PDMS), dimethyl silicone rubber, ethylene propylene diene rubber, polyvinyl alcohol, polyethylene oxide (PEO), a polymer of intrinsic microporosity (PIM), a thermally rearranged polymer, and ethyl cellulose.

As will be understood, the reinforcement layer provides the liquid impermeable wall, and by extension the reaction compartment and the mould, with form stability. This allows to produce carbonate-based articles having a predefined geometry or shape. In other words, the reinforcement layer ensures that the wall is sufficiently strong to ensure volumetric stability to the precursor which is, in use, contained in it. For example, the wall is capable to resist the forces and pressure exerted thereon, in use, by the precursor.

Advantageously, the reaction compartment comprises a bottom wall and one or more circumferential side walls. The one or more circumferential side walls advantageously, preferably completely, surround the bottom wall. Advantageously, the liquid impermeable wall forms at least one of the one or more circumferential side walls. Preferably, the liquid impermeable wall also forms the bottom wall. Preferably, a top of the mould is open. Such an open top advantageously allows easy supply of a precursor to the mould, and in particular to the reaction compartment. Optionally, the mould can further comprise a cover, such as a lid, for closing off the top of the mould, in particular after provision of the precursor to the mould.

According to a second aspect of the invention, there is provided a mould assembly as set out in the appended claims. Advantageously, the mould assembly comprises a mould according to the first aspect of the invention. Advantageously, the mould assembly further comprises a supply system configured to supply a gas comprising CO₂ to the reaction compartment. Advantageously, the mould assembly is configured to supply at least a portion of the gas comprising CO₂ through the liquid impermeable wall to the reaction compartment.

According to a third aspect of the invention, there is provided a method of producing a carbonate bonded article by carbonation as set out in the appended claims.

The method comprises preparing a precursor. The precursor comprises a carbonatable compound. The precursor can be a precursor known in the art. Advantageously, the precursor comprises water, i.e. is a suspension or a slurry. The precursor can further comprise a hydraulic binder.

The method further comprises supplying the precursor to a mould, thereby shaping the precursor. The mould is according to the first aspect of the invention. Advantageously, the precursor is supplied to the reaction compartment of the mould.

The method further comprises exposing the mould comprising the shaped precursor to an atmosphere comprising at least 0.5 vol.% CO₂ at a temperature between 5 °C and 120 °C and at a pressure between 0.01 bar and 50 bar, wherein the pressure is expressed as overpressure which regards to atmospheric pressure.

Advantageously, the relative humidity is between 5 % and 100 %, such as between 10 % and 100 %.

Advantageously, the atmosphere comprises at least 1 vol.% CO₂, such as at least 5 vol.% CO₂, preferably at least 10 vol.% CO₂, more preferably at least 20 vol.% CO₂.

Advantageously, the pressure within the atmosphere is between 0.1 bar and 25 bar, such as between 0.2 bar and 10 bar, preferably between 0.5 bar and 5 bar, for example between 1 bar and 3 bar.

Advantageously, the temperature is between 10 °C and 110 °C, such as between 15 °C and 100 °C, preferably between 20 °C and 60 °C.

Upon exposing the mould comprising the shaped precursor to the atmosphere, the CO₂ is brought into contact with the precursor, in particular with at least a portion of the carbonatable compound. Advantageously, the CO₂ contacts with the precursor through the portion of the wall surface that is permeable to CO₂.

Advantageously, the mould comprising the shaped precursor is exposed to the atmosphere for a sufficient duration to react at least a portion of the carbonatable compound with CO₂. The reaction between the carbonatable compound (or at least a portion thereof) and CO₂ results in the formation of carbonates. These carbonates, as is known in the field, acts as a binder material in the obtained article. In other words, the obtained article is a carbonate bonded article. Advantageously, with a carbonate bonded article is meant an article wherein the carbonates contribute to at least 15 %, such as at least 20 % or at least 25 %, in the final compressive strength of the article.

Optionally, the mould comprising the shaped precursor can be exposed one or more further time(s), i.e. twice or more in total, to an atmosphere as described hereinabove.

Advantageously, the obtained carbonate bonded article has a compressive strength of at least 4 MPa, preferably at least 20 MPa, such as at least 30 MPa. Advantageously, the obtained carbonate bonded article has a compressive strength between 4 MPa and 150 MPa, preferably between 20 MPa and 120 MPa, or between 30 MPa and 90 MPa.

The present invention further comprises the use of a mould according to the first aspect for obtaining a carbonate bonded article having a compressive strength of at least 4 MPa, preferably at least 20 MPa, such as at least 30 MPa. Advantageously, present invention comprises the use of a mould according to the first aspect for obtaining a carbonate bonded article having a compressive strength between 4 MPa and 150 MPa, preferably between 20 MPa and 120 MPa, or between 30 MPa and 90 MPa. The carbonate bonded article can be, without being limited thereto, a building article or an article used in construction.

Advantages of the moulds of the present disclosure include, without being limited thereto, the possibility to receive a wide variety of precursors, i.e. both precursors having a low water-to-binder ratio and having a high water-to-binder ratio. The mould provide sufficient form stability, i.e. volumetric stability, to shape the precursor, and to obtain carbonate bonded articles having a predefined shape or geometry.

A further advantage of the mould of the invention is that CO₂ can contact the carbonatable compounds in the precursor from various sides or angles, allowing a more uniform and faster carbonation, without the need for high pressures to inject CO₂ into the precursor. Also the release of any excess water as water vapour, formed during the carbonation reaction, can be easily evacuated or removed from the reaction compartment of the mould comprising the precursor.

Yet a further advantage includes easy demoulding of the carbonate bonded article.

### Brief description of the figures

Aspects of the invention will now be described in more detail with reference to the appended drawings, wherein same reference numerals illustrate same features and wherein:
Figure 1 schematically represents a mould according to the invention.
Figure 2 schematically represents another mould according to the invention.
Figure 3 schematically represents a further mould according to the invention.
Figure 4 schematically represents yet a further mould according to the invention.
Figure 5 represents a liquid impermeable wall according to the invention.
Figure 6 represents another liquid impermeable wall according to the invention.
Figure 7 represents a further liquid impermeable wall according to the invention.
Figure 8 represents yet a further liquid impermeable wall according to the invention.
Figure 9 represents yet another liquid impermeable wall according to the invention.
Figure 10 represents a carbonate bonded article obtained with a mould of the invention.
Figure 11 represents a carbonate bonded article obtained with a mould having its walls covered by a gastight tape.
Figure 12 represents carbonate bonded articles obtained with moulds of the invention having varying thicknesses.
Figure 13 represents a carbonate bonded article obtained with a polystyrene mould.

### Description of embodiments

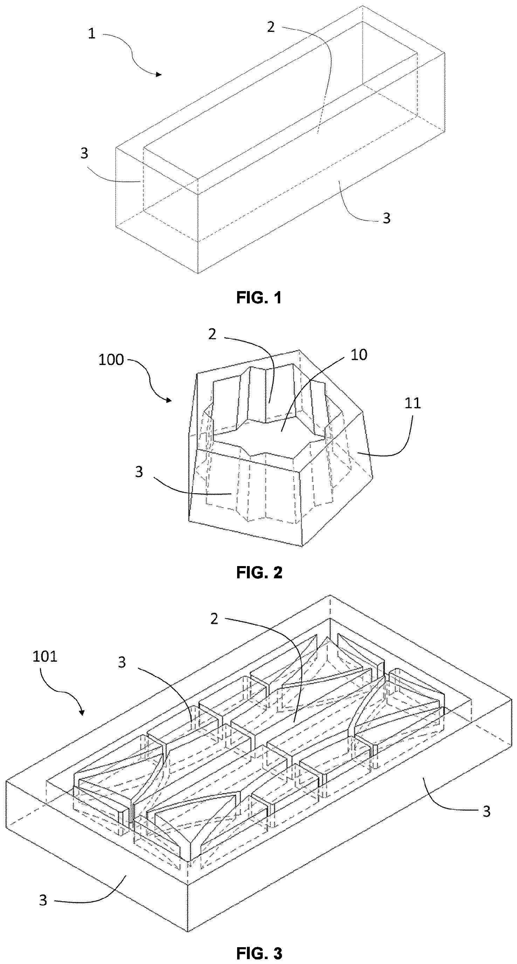

Figure 1 shows a mould 1 comprising a reaction compartment 2. The reaction compartment 2 comprises a liquid impermeable wall 3. The reaction compartment 2 has an open side, here the top. An open side advantageously facilitates the supply of a precursor to the reaction compartment 2. When the reaction compartment 2 has an open side, a liquid impermeable cover, such as a lid (not shown), can optionally be provided to close or seal the reaction compartment 2. The liquid impermeable cover can be gas permeable. A gas permeable cover allows, during use of the mould, the transfer of CO₂ through the cover towards the precursor, and the release of any excess water vapour formed during use of the mould from the reaction compartment to the surrounding atmosphere.

At least a portion of an area of the wall exposed to the reaction compartment is gas permeable, and in particular permeable to CO₂. Advantageously, the liquid impermeable and gas permeable portion has a CO₂ permeance of at least 0.001 GPU at 70 °C and 20 bar as defined hereinabove.

Figure 2 shows another mould 100 of the invention. The mould 100 comprises a reaction compartment 2 with star-shaped cross-section and having a liquid impermeable wall 3. The reaction compartment 2 comprises a bottom wall 10, or bottom surface. The reaction compartment 2 further comprises a circumferential side wall 11. The circumferential side wall 11 completely encloses the bottom wall 10.

The bottom wall 10 and the circumferential side wall 11 are liquid impermeable. At least a portion of the side wall 11 and/or the bottom wall 10 is gas permeable, in particular CO₂ permeable and preferably also water vapour permeable, wherein gas permeable and CO₂ permeable are as described hereinabove.

Figure 3 shows a further mould 101 of the invention. The mould 101 has a more complex shaped reaction compartment 2 as compared to the reaction compartments 2 of moulds 1 and 100 of Figures 1 and 2, respectively. The mould 101 comprises a liquid impermeable wall 3 defining the reaction compartment 2. A portion of the area of the liquid impermeable wall 3 exposed to the reaction compartment 2 has a CO₂ permeance of at least 0.001 GPU at 70 °C and 20 bar.

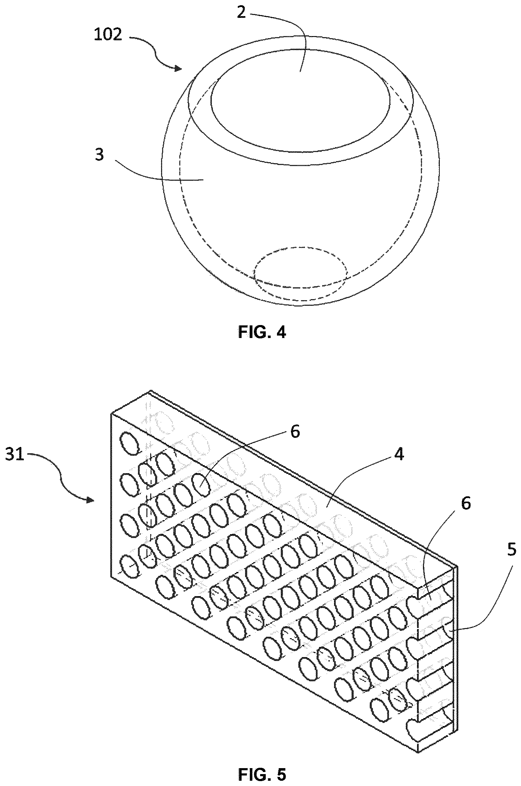

Figure 4 shows yet a further mould 102 comprising a liquid impermeable wall 3 and a reaction compartment 2. The wall 3 is curved.

Figure 5 schematically shows a liquid impermeable wall 31. The liquid impermeable wall 31 can be used in the moulds 1, 100, 101 and 102 of Figures 1 to 4.

The wall 31 comprises a reinforcement layer 4. The reinforcement layer 4 comprises a plurality of through-openings. The shape of the cross-section, as well as the size (surface area) of the through-openings 6 can vary. For example, the cross-section can be circular, rectangular, or star-shaped. The through-openings 6 can be positioned at a constant distance from each other (as shown in Figure 5), or can be distributed randomly (not shown). Advantageously, the open area of the reinforcement layer is advantageously between 1 % and 90 %, such as between 5 % and 80 %.

The wall 31 further comprises a second layer 5 made of a liquid impermeable and CO₂ permeable second material, wherein being permeable to CO₂ is as hereinabove described, i.e. the second material has a CO₂ permeance of at least 0.001 GPU at 70 °C and 20 bar.

Advantageously, the second material is as described hereinabove. Preferred examples of silicone rubber include, without being limited thereto, dimethyl silicone rubber, phenyl silicone rubber and fluorosilicone rubber. The second material can further comprise and substantially consist of polyethylene, in particular low density polyethylene, polypropylene, polypropylene oxide (PPO), PEO-PPO, polyurethane, thermoplastic elastomer-PIM (TPE-PIM), PIM-polyimide (PIM-PI), or combinations of two or more thereof.

The second layer 5 covers all through-opening(s) 6. The inventors surprisingly discovered that CO₂ can pass through the wall 31 at a sufficient rate at a pressure of about atmospheric pressure or an overpressure up to 5 bar, such as 3 bar, hence without the need of an elevated pressure. In other words, CO₂ can pass through the wall 31 at a sufficient rate in the absence of a substantial pressure difference between outside the reaction compartment and inside the reaction compartment.

The reinforcement layer 4 and the second layer 5 are stacked. The second layer 5 is provided at the side of the reinforcement layer 4 facing the inside of the reaction compartment (not shown), i.e. the side which is, in use, in contact with the precursor. This allows to reduce, and even prevent, the deposition of precursor material within at least a portion of the through-openings 6. The inventors have discovered that by doing so, when using the mould, demoulding of the obtained article is easier. This is mainly realised because sticking, attaching or anchoring of the precursor material to the reinforcement layer 4 during use of the mould is prevented.

Advantageously, the second material 5 has a thickness between 0.25 mm and 25 mm, such as between 0.5 mm and 20 mm, or between 1 mm and 15 mm. It will be understood that the thickness depends, amongst others, on the composition of the second material 5.

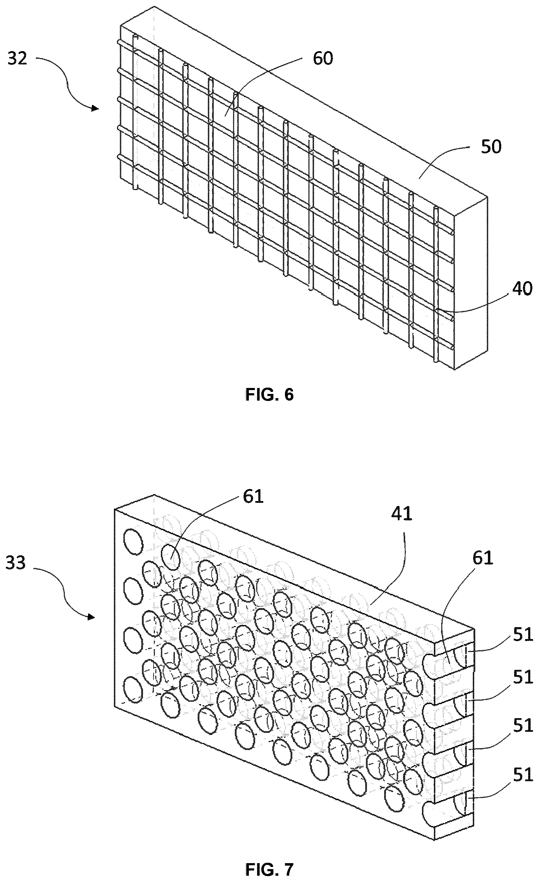

Figure 6 schematically shows another liquid impermeable wall 32. The liquid impermeable wall 32 comprises a reinforcement layer 40 comprising a plurality of through-openings 60, and a second layer 50 provided at one side of the reinforcement layer. The second layer 50 is as described hereinabove.

The liquid impermeable wall 32 differs from the liquid impermeable wall 31 of Figure 5 in that the reinforcement layer 40 is a mesh or grid. For example, the reinforcement layer 40 can be made of steel, such as stainless steel.

The second layer 50 is attached to the grid (the reinforcement layer 40) and covers the through-openings 60. The attachment can be realised by gluing or by other attachment methods known in the art.

Figure 7 schematically shows another liquid impermeable wall 33. The liquid impermeable wall 33 comprises a reinforcement layer 41 comprising a plurality of through-openings 61, and a plurality of second layers. The wall 33 differs from the wall 31 of Figure 5 in that the CO₂ permeable second material of the plurality of second layers 51 is only provided in the through openings 61. The second material thus fills at least partially the through-openings 61. The second material of the plurality of second layers 51 can be the same for each second layer 51 or can be different.

With "at least partially filled" is meant in the light of the present disclosure that the through-opening(s) is (are) filled with the second material so that the surface area of the through-opening is entirely covered with the second material and that the volume of the second material in the through-opening is at least 1 % of the total volume of the through-opening. Advantageously, the volume of the second material in the through-opening is at least 2 %, preferably at least 5 %, for example at least 10 %, or at least 20 % of the total volume of the through-opening.

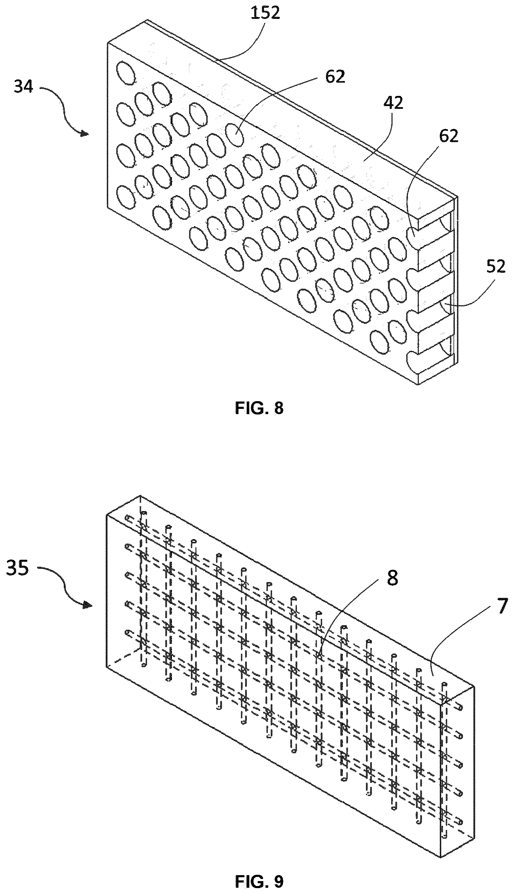

Figure 8 schematically shows yet another liquid impermeable wall 34. The liquid impermeable wall 34 comprises a reinforcement layer 42 comprising a plurality of through-openings 62, e.g. perforations.

The wall 34 further comprises a plurality of second layers 52, 152 made of a liquid impermeable and CO₂ permeable second material. The plurality of second layers 52 fill at least partially the perforations 62. The second materials of the second layers 52,152 can be the same or can be different. The second materials 52, 152 can be provided by means of methods known in the art.

Figure 9 schematically shows a liquid impermeable wall 35. The wall 35 comprises a reinforcement layer 8 embedded within a second layer 7 made of a CO₂ permeable material. In other words, the reinforcing layer 8 is provided so that it is, in the liquid impermeable wall 35, surrounded by the second layer 7.

The reinforcing layer 8 can comprise or can be a mesh or grid (as shown in Figure 9). Alternatively, or additionally, the reinforcing layer 8 can comprise, without being limited thereto, wires, cords, or a textile structure such as a woven structure, a knit, or a nonwoven structure (not shown).

The reinforcing compound 8 can comprise or substantially consist of known reinforcement materials, such as steel (for example stainless steel), glass, carbon-based compounds (for example carbon fibres), polymers (for example cellulose-based fibres, such as flax or hemp), or ceramics.

Alternatively, or additionally to the reinforcing layer, the wall can comprise a reinforcement compound provided as fibres, particles or granulates dispersed within the CO₂ permeable area of the wall, such as the second layer (not shown).

The present invention further relates to a method of producing a carbonate bonded article by carbonation as described hereinabove. Optionally, the shaped precursor is vibrated in the mould after supplying the precursor to the mould and prior or during the step of exposing the mould comprising the shaped precursor to CO₂. Vibrating the shaped precursor may contribute to the removal of entrapped air bubbles in the precursor.

The precursor can be any precursor comprising a carbonatable compound. The carbonatable compound can be any carbonatable compound known in the field. In particular, the carbonatable compound can comprise a source of an alkali metal, an alkaline earth metal, or a transition metal, for example silicates, oxides, hydroxides or sulphates thereof.

The carbonatable compound can be obtained from naturally occurring rocks and mineral, and/or from residues (e.g. by-products or waste products) from industrial processes, such as steel or cement manufacturing.

Advantageously, the carbonatable compound is provided as a granular material, i.e. a material that consists of particles. The particles can have different sizes. The particles can have a wide or narrow particle size distribution. Advantageously, at least 50 vol.% of the granular carbonatable material has a particle size smaller than 2 mm, preferably smaller than 1 mm, more preferably smaller than 0.5 mm. Advantageously, at least 50 vol.% of the granular material has a particle size larger than 15 µm, more preferably larger than 20 µm, such as larger than 25 µm. The particle size can be determined by means of techniques and apparatuses known in the field, for example by means of laser diffraction, in particular for particles having a particle size below 1 mm or 0.5 mm.

Optionally, the precursor can comprise further additives, such as a hydraulic binder, a plasticizer (for example a so-called superplasticizer), an acid, a caustic material or a salt. The optional hydraulic binder, optional plasticizer and further optional additives can be compounds known in the art.

Advantageously, the precursor is obtained by adding the carbonatable compound and the optional additives to water, thereby obtaining the precursor. The precursor can be a suspension, slurry or sludge of the carbonatable compound in water.

Advantageously, the obtained carbonate bonded article has a green strength which is sufficient to allow demoulding of the article. Optionally, the article can, after demoulding, undergo one or more further steps of exposing the article to an atmosphere comprising at least 0.5 vol.% CO₂. Such a further step(s) can be performed without the need of placing the article in a mould (i.e. the article has sufficient green strength). Such further steps allow to obtain a higher degree of carbonation of the article, in particular in a shorter period of time compared to the carbonation being carried out in a mould only. It is known that a higher degree of carbonation contributes to an increase in the strength of the carbonate bonded article, in particular its compressive strength.

When the article undergoes a further exposure step, it can be exposed to an atmosphere comprising at least 0.5 vol.% CO₂ at a temperature between 5 °C and 120 °C and at a pressure between 0.1 bar and 50 bar.

### Examples

### Example 1

A precursor was prepared by adding quartz sand, crushed argex, a coarse aggregate, and a binder (which, according to the definition given above comprises the carbonatable materials) having a d₅₀ value of 12 µm with water so that the water/binder ratio was 0.40 and the water/solid (or liquid/solid) ratio was 0.09. The binder was an electric arc furnace (EAF) stainless steel slag comprising calcium silicate.

Three different moulds were provided. All three moulds had a geometry as shown in Figure 1, the internal dimensions being 16 cm long, 4 cm wide and 4 cm high. The thickness of the side walls and the bottom wall was 2 cm. The top side was left open.

The first mould was made of silicone rubber. The second mould was made of silicone rubber, and the external surfaces were covered with aluminium tape. The third mould was made of silicone rubber, and the external surfaces were covered with polytetrafluoroethylene (PTFE) tape.

An equal amount of precursor was supplied to all three moulds. The moulds comprising the shaped precursor were then placed in an atmosphere comprising CO₂ for at least partially carbonating the carbonatable compounds.

One carbonation cycle was performed by exposing the moulds comprising the shaped precursor to the conditions of table 1.

Afterwards, the carbonate bonded articles were evaluated for strength and demoulding. It was first evaluated if they had sufficient strength to allow demoulding in a single-piece. If the strength was considered sufficient, demoulding of the article was evaluated by checking whether demoulding was easy or difficult, and how the demoulded article looked.

**Table 1: process parameters for carbonation cycles**

| | **vol.% CO₂** | **Temperature** | **Pressure** | **Relative humidity** | **Duration** |
|---|---|---|---|---|---|
| **Cycle** 1 | 50 vol.% | 30 °C | 3 bar | 75 % | 48 h |

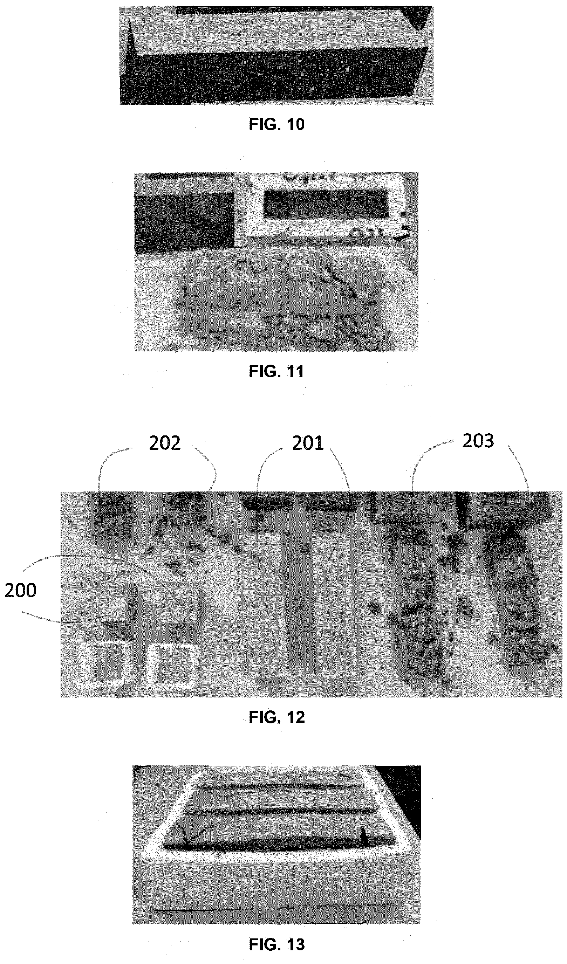

The articles obtained with the first mould had sufficient strength to allow demoulding. Demoulding was easy, and smooth surfaces were obtained (Figure 10). The articles obtained with the second and third mould, i.e. with the external sides covered with aluminium and PTFE tape, respectively, did not show sufficient strength for demoulding in a single piece (Figure 11 for the article obtained with the third mould after demoulding).

### Example 2

Four different moulds were provided. All four moulds were made of silicone rubber, and had the dimensions and wall thickness of Table 2. The top side was left open.

**Table 2: internal mould dimensions and wall thickness**

| | **Length** | **Width** | **Height** | **Thickness** |
|---|---|---|---|---|
| **Mould 1** | 4 cm | 4 cm | 4 cm | 0.3 cm |
| **Mould 2** | 4 cm | 4 cm | 4 cm | 2 cm |
| **Mould 3** | 16 cm | 4 cm | 4 cm | 1 cm |
| **Mould 4** | 16 cm | 4 cm | 4 cm | 2 cm |

The precursor of example 1 was supplied to all four moulds. The moulds comprising the shaped precursor were then placed in an atmosphere comprising CO₂ for at least partially carbonating the carbonatable compounds.

A carbonation cycle was performed by exposing the moulds comprising the shaped precursor to the respective conditions of table 3. Three variations of the carbonation process were performed, by varying the duration of the carbonation cycle. Variation 1 comprised 1 cycle of 30 hours, variation 2 comprised 1 cycle of 36 hours, and variation 3 comprised 1 cycle of 42 hours. In other words, one mould of each type, so four different moulds in total, was/were carbonated according to the parameters of Variation 1. One mould of each type, so four different moulds in total, was/were carbonated according to the parameters of Variation 2. And one mould of each type, so four different moulds in total, was/were carbonated according to the parameters of Variation 3. This allowed to study the impact of the duration of the carbonation process for each mould.

**Table 3: process parameters for carbonation cycles**

| | **vol.% CO₂** | **Temperature** | **Pressure** | **Relative humidity** | **Duration** |
|---|---|---|---|---|---|
| **Variation 1** | 50 vol.% | 30 °C | 3 bar | 75 % | 30h |
| **Variation 2** | 50 vol.% | 30 °C | 3 bar | 75 % | 36h |
| **Variation 3** | 50 vol.% | 30 °C | 3 bar | 75 % | 42h |

Afterwards, each carbonate bonded article was evaluated for strength and demoulding as explained in example 1.

It was noticed that for all three variations of the carbonation process, sufficient strength and easy demoulding was obtained with mould 1 (4 cm³ cubic mould of thickness 0.3 cm) and mould 3 (16 cm * 4 cm * 4 cm prismatic mould of thickness 1 cm), whereas with the 2 cm thick moulds 2 and 4, the articles had insufficient strength to allow a proper demoulding, even after a carbonation process duration of 42 hours.

Figure 12 shows the articles obtained after a cycle of 36 hours. The article 200 obtained with mould 1 and the article 201 obtained with mould 3 do not show damage and have smooth sides, whereas the article 202 obtained with mould 2 and the article 203 obtained with mould 4 show clear damage and could not be demoulded in a single piece.

### Example 3

Three different moulds were provided. All three moulds had a geometry as shown in Figure 1, the internal dimensions being 16 cm long, 4 cm wide and 4 cm high. The thickness of the side walls and the bottom wall was 1 cm. The top side was left open.

The first mould was a reference mould and was made of steel. The second mould was a reference mould and was made of polystyrene. The third mould was mould 3 of example 2.

An equal amount of the precursor of example 1 was supplied to all three moulds. The moulds comprising the shaped precursor were then placed in an atmosphere comprising CO₂ for at least partially carbonating the carbonatable compounds.

Five carbonation cycles were performed by exposing the mould comprising the shaped precursor to the respective conditions of table 4.

After each cycle, the carbonate bonded articles were evaluated for strength and demoulding as explained in example 1.

**Table 4: process parameters for carbonation cycles**

| | **vol.% CO₂** | **Temperature** | **Pressure** | **Relative humidity** | **Duration** |
|---|---|---|---|---|---|
| **Cycle 1** | 50 vol.% | 30 °C | 3 bar | 75 % | 24 h |
| **Cycle 2** | 50 vol.% | 30 °C | 3 bar | 75 % | 24 h |
| **Cycle 3** | 50 vol.% | 40 °C | 20 bar | 100 % | 24 h |
| **Cycle 4** | 50 vol.% | 40 °C | 20 bar | 100 % | 24 h |
| **Cycle 5** | 50 vol.% | 40 °C | 20 bar | 100 % | 24 h |

The articles obtained within the steel mould did not have sufficient strength to allow demoulding after cycles 1, 2 and 3. Although the articles did show sufficient strength after cycle 4, demoulding was difficult and required the use of a hammer. The demoulded articles showed heavy signs of damage.

The articles obtained within the polystyrene mould showed cracks and rough sides after demoulding. The moulds itself had cracks in the bottom wall, and the side walls were clearly deformed, as is visible from Figure 13.

The articles obtained within the inventive silicone rubber mould allowed demoulding already after cycle 2. Also, demoulding was easy and the obtained articles had smooth side surfaces.

### Example 4

Two precursors were tested. Precursor 1 comprised stainless steel slag as carbonatable material, as well as various fine and coarse aggregates and roughly 8 % by weight of water, based on the total weight of the precursor. Precursor 2 comprised BOF slag as carbonatable material, various fine and coarse aggregates and roughly 8 % by weight of water, based on the total weight of the precursor.

Each precursor was added to a mould having a geometry as shown in Figure 1 with internal dimensions 4 cm long, 4 cm wide and 4 cm high. The top side was left open. The wall thickness was 3 mm and the walls were made of silicone rubber.

The mould comprising the precursor were exposed to an atmosphere comprising 50 vol.% CO₂ at 40 °C, 3 bar and at a relative humidity of 10 %.

The duration until full carbonation was determined. Precursor 1 was fully carbonated after 9 hours, and precursor 2 after 48 hours. This shows that, depending on the composition of the precursor, it is possible to obtain full carbonation after short durations of less than 12 hours.

## Claims

1. Mould (1) for curing a precursor by carbonation, the mould comprising a reaction compartment (2) configured to receive and cure the precursor, wherein the reaction compartment (2) comprises a liquid impermeable wall (3, 30, 31, 32, 33, 34, 35), **characterized in that** the liquid impermeable wall is permeable to CO₂ such that CO₂ is allowed to be supplied to the precursor through the wall (3, 30, 31, 32, 33, 34, 35) while preventing liquid water to escape through the wall (3, 30, 31, 32, 33, 34, 35).

2. Mould (1) for curing a precursor by carbonation according to claim 1, wherein at least a portion of an area of the wall exposed to the reaction compartment has a CO₂ permeance of at least 0.001 GPU at 70 °C and 20 bar, preferably between 0.01 GPU and 500 GPU at 70 °C and 20 bar, preferably wherein at least 1 %, preferably at least 5 %, of a total wall area of the reaction compartment is made of a material having a CO₂ permeance of at least 0.001 GPU at 70 °C and 20 bar, preferably between 0.01 GPU and 500 GPU at 70 °C and 20 bar.

3. Mould (1) for curing a precursor by carbonation according to any one of the preceding claims, wherein the liquid impermeable wall is permeable to water vapour.

4. Mould (1) for curing a precursor by carbonation according to any one of the preceding claims, wherein between 5 % and 80 % of a total wall area of the reaction compartment is made of a material permeable to CO₂.

5. Mould (1) for curing a precursor by carbonation according to any one of the preceding claims, wherein the liquid impermeable wall (3, 31, 32, 33, 34) comprises a reinforcement layer (4, 40, 41, 42) comprising at least one through-opening (6, 60, 61, 62), wherein the liquid impermeable wall comprises a second layer (5, 50, 51, 52) made of a liquid impermeable and CO₂ permeable second material, wherein the second layer (5, 50, 51, 52) covers the through-opening (6, 60, 61, 62), preferably wherein the reinforcement layer (4, 40, 41, 42) comprises an open area between 5 % and 80 %.

6. Mould (1) according to claim 5, wherein the reinforcement layer and the second layer are stacked, or wherein the reinforcement layer is embedded in the second layer.

7. Mould (1) for curing a precursor by carbonation according to any one of claims 5 to 6, wherein the reinforcement layer (4, 40, 41, 42) comprises a polymer selected from the group consisting of polyurethane, polyethylene, polypropylene, polystyrene, and polycarbonate, and/or comprises steel, wood and/or a wood-based material selected from the group consisting of plywood, medium density fibreboard, high density fibreboard, and cardboard, optionally corrugated, preferably wood.

8. Mould (1) for curing a precursor by carbonation according to any one of the claims 5 to 7, wherein the second material comprises or consists of one or a combination of a silicone rubber, dimethyl silicone rubber, ethylene propylene diene rubber, polyvinyl alcohol, polyethylene oxide, a polymer of intrinsic microporosity, a thermally rearranged polymer and ethyl cellulose.

9. Mould (1) for curing a precursor by carbonation according to any one of the preceding claims, wherein at least a portion of the liquid impermeable wall (3) comprises one or more of a silicone rubber, dimethyl silicone rubber, ethylene propylene diene rubber, polyvinyl alcohol, polyethylene oxide, a polymer of intrinsic microporosity, a thermally rearranged polymer and ethyl cellulose.

10. Mould (1) for curing a precursor by carbonation according to any one of the preceding claims, wherein the reaction compartment (2) comprises a bottom wall (10) and one or more circumferential side walls (11) completely surrounding the bottom wall (10), wherein the liquid impermeable wall (3, 31, 32, 33, 34, 35) forms at least one of the one or more circumferential side walls (11), and preferably the bottom wall (10), preferably wherein a top of the mould is open.

11. A mould assembly, comprising the mould (1) according to any one of the preceding claims, and a supply system configured to supply a gas comprising CO₂ to the reaction compartment (2), wherein the mould assembly is configured to supply at least a portion of the gas comprising CO₂ through the liquid impermeable wall (3) to the reaction compartment (2).

12. Method of producing a carbonate bonded article by carbonation, comprising:
- preparing a precursor comprising a carbonatable compound,
- supplying the precursor to a mould (1), thereby shaping the precursor,
- exposing the mould (1) comprising the shaped precursor to an atmosphere comprising at least 0.5 vol.% CO₂ at a temperature between 5 °C and 120 °C and at a pressure between 0.01 bar and 50 bar for a sufficient duration to react at least a portion of the carbonatable compound with CO₂, thereby obtaining a carbonate bonded article, wherein the pressure is expressed as overpressure with regard to atmospheric pressure,
**characterized in that** the mould (1) is a mould according to any one of the preceding claims.

13. Method according to claim 11, wherein the atmosphere comprises at least 10 vol.% CO₂.

14. Method according to claim 11 or claim 12, wherein the pressure is between 0.5 bar and 5 bar.

15. Use of a mould according to any one of claims 1 to 10 for obtaining a carbonate bonded article having a compressive strength of at least 4 MPa.
